# EUROPÄISCHE PATENTSCHRIFT

(11) **EP 1 618 819 B1**
(45) Veröffentlichungstag und Bekanntmachung des Hinweises auf die Patenterteilung: **12.09.2007**
(21) Anmeldenummer: 05405372.3
(22) Anmeldetag: 08.06.2005
(51) Int. Cl.: A47J 43/24

(54) **Salatschleuder**
Salad spinner
Essoreuse à salade

(30) Priorität: 21.07.2004 CH 12302004; 10.10.2004 CH 16722004
(43) Veröffentlichungstag der Anmeldung: 25.01.2006
(73) Patentinhaber: MOHA Moderne Haushaltwaren AG, 1214 Vernier (CH)
(72) Erfinder: Herren, Bruno, 6052 Hergiswil (CH)
(74) Vertreter: Schneider Feldmann AG Patent- und Markenanwälte

(56) Entgegenhaltungen:
- EP-A- 0 439 413
- EP-A- 0 919 177
- FR-A- 1 259 498
- FR-A- 2 688 131

## Beschreibung

Die vorliegende Erfindung betrifft eine Salatschleuder bestehend aus einer Schüssel und einem darin gelagerten siebartigen Schleuderkorb, der mit einer Lagermulde auf einem Lagernocken ruht, sowie einem Deckel, an dessen Unterseite ein Antriebsdrehteller um eine vertikale Achse drehbar angeordnet ist, welcher mittels Laschen in Eingriff mit dem Schleuderkorb steht, und einem Antrieb, mit welchem der Antriebsdrehteller in Rotation versetzbar ist, wobei der Deckel einen Eingreifrand aufweist, der in die Schüssel eingreift.

Salatschleudern der obgenannten Bauart sind beispielsweise aus der EP-0'919'177 bekannt, während ältere Modelle mit andersartiger Lagerung des Schleuderkorbes beispielsweise aus der FR-A-1'012'262 oder der CH-A-353'509 bekannt sind.

Salatschleudern gemäss dem Oberbegriff des Patentanspruches 1 sind auf dem Mark erhältlich, und eine entsprechende Version geht beispielsweise aus der WO-03/043477 der Anmelderin hervor.

Salatschleudern der erwähnten Bauart sind relativ voluminös und nehmen entsprechend viel Platz in einem Küchenschrank ein. Nachdem in der Salatschleuder der Salat weitgehend vom anhaftenden Wasser des vorgängigen Spülvorganges befreit ist, wird der Salat aus dem Schleuderkorb entnommen und in eine Salatschüssel zur weiteren Anrichtung gegeben. Auch die entsprechende Salatschüssel ist relativ gross und nimmt weiteren Platz in der Küche weg.

Es scheint daher naheliegend, die Schüssel der Salatschleuder selbst auch zur Anrichtung und zum Servieren des Salats zu verwenden. Bei den heute auf dem Markt üblichen Salatschleudern ist dies jedoch kaum sinnvoll realisierbar. Zum einen sind diese Schüsseln aus transparentem Kunststoff gefertigt, so dass man erkennen kann, wann der Schleudervorgang beendet werden kann. Diese transparenten Kunststoffschüsseln erfüllen bei weitem nicht die ästhetischen Gesichtspunkte, die man üblicherweise an eine Salatschüssel stellt. Hinzu kommt, dass diese Schüsseln bei den heute üblichen und weit verbreiteten Ausführungsformen einen zentralen, erhöhten Lagernocken aufweisen, der einstückig mit dem Boden der Schüssel gefertigt ist. Dieser Nocken ist nicht nur ästhetisch unschön, sondern er wirkt auch ausgesprochen störend, wenn der Salat in der Schüssel mit der Salatsauce vermischt werden soll. Insbesondere können sich die Zinken des Salatbestecks auch mit diesem Lagernocken verfangen, wobei der Lagernocken im schlimmsten Falle gar zerstört werden kann.

Dieses letztgenannte Problem ist nicht gegeben, wenn man eine Schüssel für ein Gerät zum Mischen von Salat herstellt. Dies zeigt die EP-A-0'439'413, die generell erwähnt, dass die Schüssel aus beliebigem Material gefertigt sein kann, also auch aus Glas oder Keramik. Dass aber auch für diesen Fall, der wesentlich unproblematischer ist als eine schnelldrehende Salatschleuder, die Massungenauigkeiten Anpassungen verlangen zeigt die FR-A-2'688'131 derselben Anmelder, in welcher eine Lösung gezeigt wird, bei der die Massungenauigkeiten durch eine in Längsrichtung verstellbare Lagerwelle kompensiert werden.

Es ist daher die Aufgabe der vorliegenden Erfindung, eine Salatschleuder zu schaffen, die so gestaltet ist, dass deren Schüssel gleichzeitig als Servierschüssel für den Salat Verwendung finden kann, ohne dabei die erwähnten Nachteile aufzuweisen.

Diese Aufgabe löst eine Salatschleuder der eingangs genannten Art mit den Merkmalen des kennzeichnenden Teiles des Patentanspruchs 1.

Zu der Lösung sind folglich zwei Schritte zu realisieren, nämlich einerseits die Materialwahl zu ändern, und andererseits die Schüssel so zu gestalten, dass sie funktional für beide unterschiedlichen Aufgaben, nämlich einerseits als Auffangkorb während des Schleudervorganges dienen zu können mit entsprechender Lagerfunktion, und andererseits der Funktion als Salatschüssel die hinderliche und dabei gleichzeitig zerstörbare Lagernocken als getrenntes Teil zu gestalten. Relevant ist dabei die Idee, die Schüssel der Salatschleuder aus Glas zu fertigen. Diese für den Laien praktisch naheliegende Lösung ist für den Fachmann jedoch eine nicht begehbare Lösung. Hierzu muss man wissen, dass die Massgenauigkeit von Glasschüsseln und auch Schüsseln der Gebrauchskeramik in der Fertigung hohen Toleranzen unterliegt. Insbesondere relativ grosse Glasschüsseln mit Durchmessern von 20 bis 30 cm können so weit unrund sein, dass der Durchmesser der Schüssel vom idealen Normdurchmesser bis zu 5 % abweichen kann. Eine solche Ungenauigkeit führt jedoch zu Problemen bei der Funktionsfähigkeit der Salatschleuder, die entsprechende Massungenauigkeiten nur in einem engeren Toleranzbereich überhaupt zulässt. Dies bedeutet, dass entgegen den heute üblichen Fertigungsmethoden die hier verwendeten Glasschüsseln auf eine Massgenauigkeit ausgemessen und entsprechend die Schüsseln, welche ausserhalb der zulässigen Toleranz liegen, zur Glasschmelze zurückgeführt werden müssen. Erfahrungsgemäss liegt die hierbei auftretende Ausschussrate weit über 10 % der Gesamtproduktion. Ein solcher Wert ist jedoch in der Glasindustrie völlig unproblematisch, da eine Rückführung vom Glas in die Schmelze erwünscht ist.

Auch die Anbringung des Lagerzapfens im Glasboden der Schüssel wäre ausgesprochen problematisch. Die dadurch entstehenden grossen Wandstärkedicke-Unterschiede führen zu entsprechenden Spannungen, die die Qualität der Schüsseln stark beeinflussen würden.

Entsprechend weist die Erfindung einen Lagernocken auf, welcher als einlegbare Platte in die Schüssel eingelegt wird. Es ist erforderlich, dass entsprechend diese Platte und der Innenboden der Schüssel grössen- und formmässig aufeinander angepasst sind.

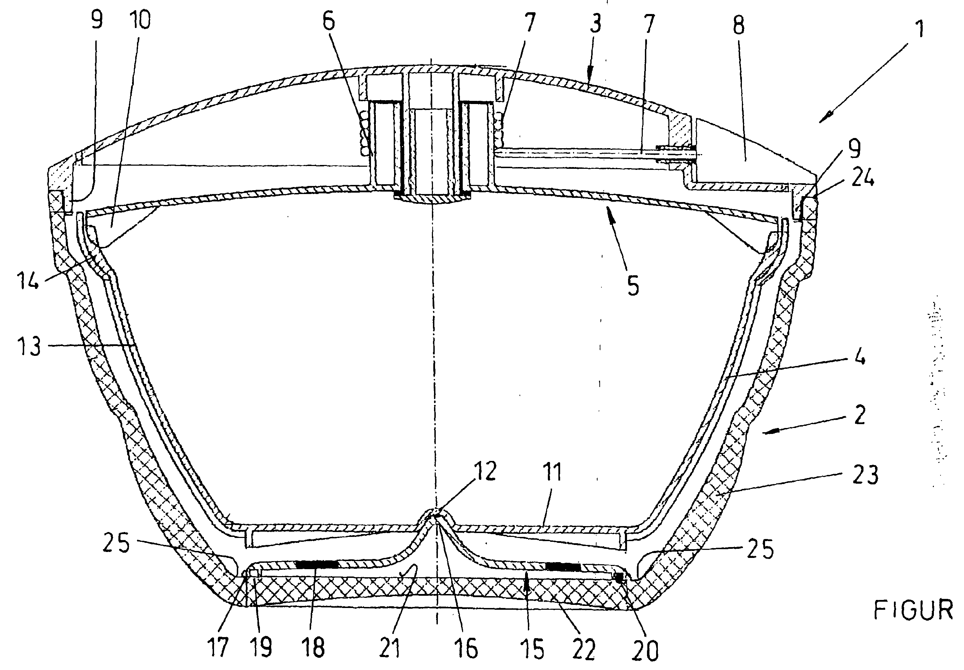

In der nachfolgenden Beschreibung wird eine bevorzugte Ausführungsform des Erfindungsgegenstandes anhand der beiliegenden Zeichnung beschrieben.

In der Zeichnung ist ein bevorzugtes Ausführungsbeispiel des Erfindungsgegenstandes dargestellt. Die Salatschleuder ist insgesamt mit 1 bezeichnet. Sie besteht aus einer Schüssel 2, die hier erfindungsgemäss aus Glas oder Keramik gefertigt ist, und einem darauf passenden Deckel 3. Wenn nachfolgend auch meist nur von Glassschüsseln die Rede ist, so sei, falls nicht sinnentstellend, immer auch die Lösung aus Keramik verstanden. In die Schüssel 2 ist ein herausnehmbarer Schleuderkorb 4 einsetzbar. Dieser Schleuderkorb 4 ist üblicherweise aus Kunststoff gefertigt, genauso wie der Deckel 3. Der Deckel 3 kann aber auch aus Metall, insbesondere aus rostfreiem Stahl oder einem verchromten Stahl gefertigt sein. In einer bevorzugten Ausführungsform wird ein Deckel mit einem automatischen Schnurrückzug und doppelt wirkendem Freilauf verwendet, wie er aus der WO-03/043477 der Anmelderin bekannt ist. Integriert im Deckel 3 ist ein Antriebsdrehteller 5 angeordnet, der auf einem Lagerzapfen an der Innenseite des Deckels 3 drehbar gelagert ist. Der Antriebsdrehteller 5 ist fest verbunden mit einer Seiltrommel 6, auf der sich ein Zugseil 7 aufwickelt bzw. durch entsprechenden Zug, den der Benutzer an einem Zuggriff 8 anlegt, abziehbar ist. Auf die weitere Ausgestaltung des Antriebsmechanismus wird hier verzichtet und rein beispielsweise auf die bereits erwähnte WO-03/043477 verwiesen. Für die Erfindung ist jedoch die Ausgestaltung des Antriebsmechanismus nicht von Bedeutung. So könnte der Antrieb statt mittels einem Zugseil auch über eine Kurbel erfolgen, wie dies von älteren Salatschleudern auch schon bekannt ist.

An der Unterseite ist der Antriebsdrehteller 5 mit zum Schleuderkorb 4 hin gerichteten Laschen 10 versehen, die mit dem Schleuderkorb 4 in eingreifender Wirkverbindung bringbar sind.

Der Schleuderkorb 4, der wie bereits erwähnt üblicherweise aus Kunststoff besteht und einem Sieb entsprechend gestaltet ist, besitzt einen Schleuderkorbboden 11, in dem zentrisch eine Lagermulde 12 eingeformt ist, welche sich in das Innere des Schleuderkorbes 4 vorstehend erstreckt. Am Schleuderkorbboden 11 anschliessend erstreckt sich nach oben gerichtet die Schleuderkorbwand 13, die in einem verdickten Rand 14 endet, in dessen Innenseite eine Vielzahl von dicht aneinander liegenden Einrastrillen eingeformt sind, zwischen denen die bereits erwähnten Laschen 10 am Antriebsdrehteller 5 hinein greifen können.

Der Schleuderkorb 4 lagert möglichst punktförmig auf einem Lagernocken 16, der in einer Platte 15 eingeformt ist. Diese Platte 15, die im Prinzip aus einem beliebigen Material gefertigt sein könnte, ist jedoch vorzugsweise aus Kunststoff oder Metall hergestellt. Zur Minimierung der Reibung ist die Lagerung des aus Kunststoff gefertigten Schleuderkorbes auf einen metallenen Lagernocken besonders vorteilhaft. Entsprechend wird diese Platte 15 vorzugsweise aus rostfreiem Stahl oder aus einem verchromten Stahl gefertigt. Die Platte 15 ist bevorzugterweise mit einem umlaufenden Rand 17 versehen, der in seiner Benutzungslage nach unten zum Boden der Schüssel hin umgeformt ist. Zudem versieht man die Platte 15 ebenfalls vorteilhafterweise mit mindestens zwei Durchbrüchen 18, die ein erleichtertes Fassen der Platte 15 erlauben.

Dank dieser Platte 15 muss folglich die Glasschüssel 2 keinen Lagernocken mehr aufweisen. Damit die Platte 15 jedoch die Glasschüssel 2 nicht verkratzt, lässt sich die Platte 15 vorteilhafterweise mit einer umlaufenden Rille 19 versehen, in welcher eine gummielastische Auflage 20 gesichert gehalten sein kann. Diese gummielastische Auflage 20 bildet folglich nicht nur einen Kratzschutz, sondern ebenfalls einen Gleitschutz, und stellt damit sicher, dass die Platte 15 während des Schleudervorganges praktisch nicht verrutschen kann. Um dies zu verhindern, ist auch die Glasschüssel 2 selber entsprechend ausgestaltet. Die Glasschüssel 2 weist insbesondere einen planen Innenboden 21 auf, und dessen Durchmesser entspricht mindestens annähernd genau dem Durchmesser der darin einzulegenden Platte 15. Zudem gestaltet man den Übergang des planen Innenbodens 21 zur Schüsselwand 23 mit möglichst kleinem Radius, so dass in diesem Bereich praktisch eine umlaufende Anschlagkante 25 entsteht. Im hier dargestellten Beispiel ist der Innenboden 21 der Schüssel 2 über die gesamte Fläche plan gestaltet, während die äussere Fläche des Bodens als konkaver Aussenboden 22 geformt ist.

Prinzipiell ist es selbstverständlich auch möglich, den Innenboden mittig konvex zu gestalten, wobei dann umlaufend um diese Erhöhung mindestens eine plane Ringfläche verbleiben soll, die eine entsprechend plane Auflage der Platte 15 garantiert. Prinzipiell wäre eine zumindest annähernd formschlüssige Gestaltung der Platte 15 und des Innenbodens denkbar. In Realität lässt sich dies jedoch kaum verwirklichen. Hierzu ist die Massungenauigkeit von Glasschüsseln und Schüsseln aus Gebrauchskeramik zu gross. Genau diese Problematik muss bei der Fertigung der Glasschüsseln berücksichtigt werden. So müssen die Glas- oder Keramikschüsseln genau kontrolliert werden, wobei massgebend die möglichst genaue Rundheit der Schüssel eine Rolle spielt. So soll der Durchmesser der Schüssel im oberen Randbereich von einem Normdurchmesser, welcher durch den Deckel vorgegeben ist, um nicht mehr als maximal 2%, und bevorzugterweise nur rund 1 %, abweichen. Sind jedoch die Abweichungen zu gross, so ist nicht mehr sicher gestellt, dass der Auflagerand des Deckels 3 noch genügend auf den Schüsselrand 24 aufliegt. Ist diese Auflage ungenügend, so kann der Deckel in die Schüssel kippen, wobei sich die verschiedenen Elemente verkanten können. Die Abweichungen der Massgenauigkeit am Innenboden der Schüssel sind üblicherweise wesentlich geringer. Der Durchmesser der planen Fläche 21 einerseits und der Durchmesser der Platte 15 andererseits sollten so aufeinander abgestimmt sein, dass diese beiden Durchmesser um weniger als den halben Durchmesser des Lagernockens 16 voneinander abweichen. Sind diese Abweichungen zu gross, so kann sich bei ungleichmässiger Gewichtsverteilung der Schleuderkorb 4 während des Schleudervorgangs verformen, schräg zu liegen kommen und entsprechend verkanten.

### Bezugszeichenliste

- 1: Salatschleuder
- 2: Schüssel
- 3: Deckel
- 4: Schleuderkorb
- 5: Antriebsdrehteller
- 6: Seiltrommel
- 7: Zugseil
- 8: Zuggriff
- 9: Eingreifrand
- 10: Laschen am Drehteller
- 11: Schleuderkorbboden
- 12: Lagermulde
- 13: Schleuderkorbwand
- 14: verdickter Rand mit vertikalen Einrastrillen
- 15: Platte
- 16: Lagernocken
- 17: Rand
- 18: Durchbrüche
- 19: umlaufende Rille
- 20: gummielastische Auflage
- 21: planer Innenboden
- 22: konkaver Aussenboden
- 23: Schüsselwand
- 24: Schüsselrand
- 25: Anschlagkante

## Patentansprüche

1. Salatschleuder bestehend aus einer Schüssel (2) und einem darin gelagerten Schleuderkorb (4), der mit einer Lagermulde (12) auf einem Lagernocken (16) ruht, und einem Deckel (3), an dessen Unterseite ein Antriebsdrehteller (5) um eine vertikale Achse drehbar angeordnet ist, welcher mittels Laschen (10) in Eingriff mit dem Schleuderkorb (4) steht, und einem Antrieb, mit welchem der Antriebsdrehteller (5) in Rotation versetzbar ist, wobei der Deckel (3) einen Eingreifrand (9) aufweist, der in die Schüssel (2) eingreift, **dadurch gekennzeichnet, dass** die Schüssel (2) aus Glas oder Keramik gefertigt ist, einen Innenboden (21) mit planer Auflage aufweist, und dass der Lagernocken (16), der in der Lagermulde (12) des Schleuderkorbes Aufnahme findet, in einer auf dem Innenboden (21) lose lagernden Platte (15) eingeformt ist, wobei der Durchmesser des Innenbodens (21) und der Durchmesser der darin lagernden Platte (15) mindestens annähernd deckungsgleich sind.

2. Salatschleuder nach Anspruch 1, **dadurch gekennzeichnet, dass** der Aussendurchmesser der Glasschüssel (2) von einem durch den Deckel (3) vorgegebenen Normdurchmesser maximal um 2 % abweicht.

3. Salatschleuder nach Anspruch 1, **dadurch gekennzeichnet, dass** der Innenboden (21) vollständig plan ist und der Übergang zur Wand der Schüssel (2) eine Anschlagskante (25) für die eingelegte Platte (15) bildet.

4. Salatschleuder nach Anspruch 1, **dadurch gekennzeichnet, dass** der Innenboden (21) der Schüssel (2) gewölbt ist und eine plane ringförmige Fläche aufweist, deren Übergang zur Wand der Schüssel einen Anschlag für die eingelegte Platte (15) bildet.

5. Salatschleuder nach Anspruch 3 oder 4, **dadurch gekennzeichnet, dass** der Durchmesser der planen Fläche maximal um die Hälfte grösser ist als der Durchmesser des Lagernockens (16).

6. Salatschleuder nach Anspruch 1, **dadurch gekennzeichnet, dass** die Platte (15) aus Kunststoff oder Metall und der Lagernocken (16) einstückig daraus nach oben vorstehend gefertigt ist.

7. Salatschleuder nach Anspruch 6, **dadurch gekennzeichnet, dass** die Platte (15) mindestens einen umlaufenden nach unten geformten Rand und zwei oder mehrere eingestanzte Durchbrüche (18) aufweist, die ein Erfassen der Platte (15) erleichtern.

8. Salatschleuder nach Anspruch 6, **dadurch gekennzeichnet, dass** die Platte (15) auf deren in der Benutzungslage auf den Schüsselboden zu liegen kommenden Fläche eine umlaufende Rille oder Nut (19) mit einer gummielastischen Auflage (20) als Kratz- und Gleitschutz aufweist.

## Claims

1. A salad spin-drier consisting of a bowl (2) and a spin-drier basket (4) with a bearing recess (12) which is mounted therein and which rests with a bearing cam (16) in said recess (12), and of a lid (3) on whose lower side a rotary drive plate (5) is rotatably arranged about a vertical axis, which by way of tabs (10) is engaged with the spin-drier basket (4), and of a drive with which the rotary drive plate (5) may be set into rotation, wherein the lid (3) comprises an engagement edge (9) which engages into the bowl (2), **characterized in that** the bowl (2) is manufactured of glass or ceramic, has an inner base (21) with a plane rest, and that the bearing cam (16), which rests in the bearing recess (12) of the drier basket (4), is integrally formed in a plate (11) which is loosely mounted on the inner base (21), wherein the diameter of the inner base (21) and the diameter of the plate (15) mounted therein are at least approximately equal.

2. A salad spin-drier according to claim 1, **characterized in that** the outer diameter of the glass bowl (2) deviates from a standard diameter set by the lid (3) maximally by 2%.

3. A salad spin-drier according to claim 1, **characterized in that** the inner base (21) is completely plane, and the transition to the wall of the bowl (2) forms an abutment edge (25) for the inserted plate (15).

4. A salad spin-drier according to claim 1, **characterized in that** the inner base (21) of the bowl (2) is curved and has a plane, annular surface whose transition to the wall of the bowl forms an abutment for the inserted plate (15).

5. A salad spin-drier according to claim 3 or 4, **characterized in that** the diameter of the plane surface is maximally larger by half, than the diameter of the bearing cam (16).

6. A salad spin-drier according to claim 1, **characterized in that** the plate (15) is manufactured of plastic or metal and the bearing cam (16) is manufactured as one piece therefrom projecting upwardly.

7. A salad spin-drier according to claim 6, **characterized in that** the plate (15) comprises at least one peripheral, downwardly shaped edge and two or more punched openings (18) which simplifies a gripping of the plate (15).

8. A salad spin-drier according to claim 6, **characterized in that** the plate (15) on its surface which comes to lie on the bowl base in the position of use comprises a peripheral channel or groove (19) with a rubber-elastic rest (20) as a scratch- and slip-protection.

## Revendications

1. Essoreuse à salade composé d'un bol (2) et d'un panier centrifuge (4) y étant logé dedans - ce panier centrifuge ayant un creux de support (12) qui repose sur une came d'appui (16) - et avec un couvercle (3), sur la face inférieure duquel un plateau tournant d'entraînement (5) est logé de sorte à être mobile autour d'un axe vertical, ce plateau tournant d'entraînement (5) étant en prise avec le panier centrifuge (4) à l'aide de languettes (10) et avec un dispositif d'actionnement avec lequel le plateau tournant d'actionnement (5) peut être mis en rotation, auquel cas le couvercle (3) présente un bord d'engagement (9), lequel s'engrène dans le bol (2), **caractérisée en ce que** le bol (2) est fabriqué en verre ou en céramique, qu'il présente un fond intérieur (21) avec un revêtement plat et que la came d'appui (16) - laquelle peut se loger dans le creux de support (12) du panier centrifuge - est moulée dans une plaque (15) se logeant de façon mobile sur le fond intérieur (21), auquel cas le diamètre du fond intérieur (21) et le diamètre de la plaque (15) y étant logée dessus sont au moins approximativement égaux.

2. Essoreuse à salade selon la revendication 1, **caractérisé en ce que** le diamètre extérieur du bol en verre (2) dévie au maximum d'environ 2% d'un diamètre standardisé prescrit par le couvercle (3).

3. Essoreuse à salade selon la revendication 1, **caractérisé en ce que** le fond intérieur (21) est entièrement plat et que le passage vers la paroi du bol (2) forme un bord d'arrêt (25) pour la plaque (15) encastrée.

4. Essoreuse à salade selon la revendication 1, **caractérisé en ce que** le fond intérieur (21) du bol (2) est arqué et qu'il présente une surface plane annulaire, dont le passage vers la paroi du bol forme un arrêt pour la plaque (15) encastrée.

5. Essoreuse à salade selon la revendication 3 ou 4, **caractérisé en ce que** le diamètre des surfaces planes est de moitié plus grand que le diamètre de la came d'appui (16).

6. Essoreuse à salade selon la revendication 1, **caractérisé en ce que** la plaque (15) est fabriquée en matière synthétique ou en métal et que la came d'appui (16) y est fabriquée dessus saillant vers le haut en formant une seule pièce avec la plaque.

7. Essoreuse à salade selon la revendication 6, **caractérisé en ce que** la plaque (15) présente au moins un bord tout au tour façonné vers la bas et deux ou plusieurs ouvertures gravées (18), lesquelles facilitent une saisie de la plaque (15).

8. Essoreuse à salade selon la revendication 6, **caractérisé en ce que** la plaque (15) présente, sur ses surfaces venant à gésir sur la position d'utilisation sur le fond du bol, une cannelure ou une rainure tout au tour (19) avec un support (20) en gomme élastique en tant que dispositif anti-égratignure et antidérapant.
